# EUROPEAN PATENT APPLICATION

(11) **EP 1 848 200 A1**
(43) Date of publication of application: **24.10.2007**
(21) Application number: 06075934.7
(22) Date of filing: 21.04.2006
(51) Int. Cl.: H04N 5/222, H04N 5/77, G11B 27/034

(54) **Integrated high defintion image recording and editing system**

(71) Applicant: Den Haas, Johannes Marinus Cornelis Wilhelmus, 4817 ZL Breda (NL)
(72) Inventor: Den Haas, Johannes Marinus Cornelis Wilhelmus, 4817 ZL Breda (NL)
(74) Representative: Lips, Hendrik Jan George

(57) **Abstract**

The invention relates to a compact and mobile recording and editing system, called Purple Link Interface (2), for image and sound material in preferably uncompressed form with a suitable camera (1) with a resolution standard 3K/800Mb/s; 50p/fps or 4:4:4, in which the necessary components of the Purple Link Interface (2) are accommodated in a suitable box (9) with swivelling castors (10) and handgrips (11), so that on location quickly and efficiently image and sound material can be recorded and, if necessary, edited directly, which decreases the production costs for image and sound material considerably.

## Description

The present invention relates to an interface for processing, saving, editing and such of preferably uncompressed HD-image and sound material, called Purple Link Interface in which said interface is directly coupled to a camera with accessories for recording image and sound according to the resolution standard 3K/800Mb/s; 50p/fps; HD 4:4:4 and possibly HD 4:2:2, in which working with uncompressed HD image and sound material is the most suitable for obtaining an end product of the highest quality.

In practice, the demands on recording and editing image and sound material are increasingly higher. Especially the gaining of time combined with the quality of image and sound material is the key.

In order to gain time, one should have possibilities for editing, colour corrections and such on location.

The European Patent Document EP 05076425, submitted on June 17^{th}, 2005 from submitter/inventor De HAAS, Johannes, Marinus, Cornelis, Wilhelmus, Breda, The Netherlands, titled: "Improved Work Method For Manufacturing Audio Visual Productions" already describes how image and sound material from a recording camera, according to the resolution standard HD 4:4:4, is directly processed to the required audio visual product by means of a connected specific interface in a thereto coupled HD editing machine. The whole of cameras, HD-editing machine and such is placed in a company vehicle, the size of an average transporter.

On the recording location, the cameras can then be connected to the HD editing machines by means of long cables.

With it, the whole of cameras and editing machines with resolution standard HD 4:4:4 and HD 4:2:2 is still extensive and so the wish arose to construct the whole still more compactly and mobile so that, for example, no streets and such have to be closed off during recording, and in order to record suitable image and sound material quickly and to edit the material directly, to acquire suitable image and sound material for the client within very little time.

Therefore it is the aim of the invention to provide in a very compact interface, with which one can work fast and flexible on location.

For this, the interface according to the invention is further developed and/or modified in such an inventive way, characterized in that, said Purple Link Interface is constructed as a completely integrated processing and editing unit for the recorded image and sound material directly recorded with said coupled camera and in which the Purple Link Interface, placed in a box, consists of the following components:
- a two-cabled 3K/800Mb/s; 50p/fps; 4:4:4 of 4:2:2 Dual Link System with an SCSI cable junction connected with:

- a Raid Storage system consisting of a number of known coupled hard disks;
- an LTC or VIT RS422 generator for eliminating time differences between image and sound;
- a PC or CPU with monitor with extra Raid Control cards and editing software for editing effects and exporting image and sound material.

The advantage is, that the developed Purple Link Interface is placed in a box in a well-organized manner, with all the necessary components, which especially improves the work efficiency on location considerably.

Further, the interface according to the invention is further developed in such a way, characterized in that, said Purple Link Interface is accommodated in a 19 inch rack and placed in a handy standard 19 inch box for computers, in which said box is provided with swivelling castors and handgrips.

The advantage is that common standard boxes for computers can be used to accommodate the Purple Link Interface completely.

Furthermore, the interface according to the invention is further developed in such a way, characterised in that, said camera with resolution standard 3K/800Mb/s; 50p/fps or HD 4:4:4, for example, a Grass Valley Viper camera or an ARRI D20 camera is suitable.

The advantage is that, after testing several cameras, a camera with the characteristics of the Grass Valley Viper camera was most suitable for the present recording system and the ARRI D20 also belongs to the mentioned range of cameras.

The preferred construction of the invention will be described by way of example, and with reference to the accompanying drawing.

In which:
- Fig. 1: shows a schematic arrangement of the components of the Purple Link Interface coupled to a suitable camera according to the present invention;
- Fig. 2: shows a further elaboration and arrangement of the components of the Purple Link Interface; and
- Fig. 3: shows the easily moveable box with therein the Purple Link Interface.

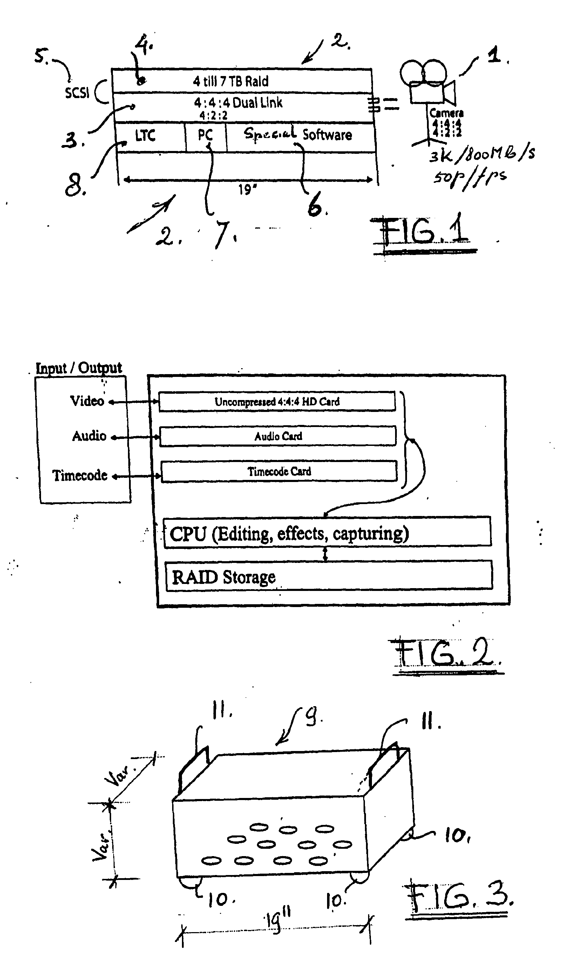

Figure 1 shows a schematic arrangement of the components of the Purple Link Interface connected to the camera with a resolution standard of 3K/800Mb/s; 50p/fps; 4:4:4 or possibly 4:2:2. The image and sound material, the so called workflow, comes with two cables from camera 1 into the Purple Link Interface 2 through the 3K/800Mb/s; 50p/fps; 4:4:4 or 4:2:2 Dual Link system 3 into the TB Raid system 4 from 4 till 7 Terabytes. The Dual Link system 3 is connected to the TB Raid system 4 by means of a SCSI cable 5. The SCSI cable 5 is a universal cable for very large data transports. The 4 till 7 TB Raid system 4 is constructed of a number of hard disks.

From the Raid system 4 the user (operator) can adjust the Purple Link Interface 2 in such a way that the image and sound material is shown on a (not indicated) monitor and with that can be edited, as described in the earlier submitted and said European Patent document EP 05076425 of the present submitter/inventor, to which for the sake of brevity is referred.

Editing the image and sound material can be done by applying effects or changing backgrounds with the indicated special software 6 of claim 5. The special software 6 works, for example, with Windows on the indicated PC 7. With the indicated LTC or VIT RS422 8, the Latent Time Code generator, time differences between image and sound can be eliminated.

The whole of the Purple Link Interface is placed in a box 9 with a standard length of 19 inch (see figure 3). On location, the box 9 can be moved with the swivelling castors 10 and can easily be handled with the handgrips 11.

Figure 2 shows a further arrangement of the afore described preferred components, by which the scheme does not need further explanation.

Finally it has to be emphasized, that the above description constitutes a preferred embodiment of the invention, but that obviously further modifications are possible without departing the scope of this patent description.

## Claims

1. Interface for processing, saving, editing and such of preferably uncompressed HD-image and sound material, called Purple Link Interface (3) in which said interface is directly coupled to a camera (1) with accessories for recording image and sound according to the resolution standard 3K/800Mb/s; 50p/fps; HD 4:4:4 and possibly HD 4:2:2, in which working with uncompressed HD image and sound material is the most suitable for obtaining an end product of the highest quality, **characterized in that**, said Purple Link Interface (2) is constructed as a completely integrated processing and editing unit for the recorded image and sound material directly recorded with said coupled camera (1) and in which the Purple Link Interface (2), placed in a box (9), consists of the following components:
- a two-cabled 3K/800Mb/s; 50p/fps; 4:4:4 of 4:2:2 Dual Link System (3) with an SCSI cable junction (5) connected with:
- a Raid Storage system (4) consisting of a number of known coupled hard disks;
- an LTC or VIT RS422 generator (8) for eliminating time differences between image and sound;
- a PC or CPU with monitor (7) with extra Raid Control cards and editing software for editing effects and exporting image and sound material.

2. Interface as claimed in claim 1, **characterized in that**, said Purple Link Interface (2) is accommodated in a 19 inch rack and placed in a handy standard 19 inch box (9) for computers, in which said box is provided with swivelling castors (10) and handgrips (11).

3. Interface as claimed in claim 1, **characterized in that**, said camera (1) with resolution standard 3K/800Mb/s; 50p/fps or HD 4:4:4, for example, a Grass Valley Viper camera or an ARRI D20 camera is suitable.

4. Interface as claimed in claim 1, **characterized in that**, said Raid Storage (4) preferably has a total capacity of approximately 4-7 Tera Bytes to interconnected hard disks.

5. Interface as claimed in claim 1, **characterized in that**, said editing software runs on Windows and, for example, consists of the programs Premiere, Final CUT-Pro and AVID.
